# EUROPEAN PATENT SPECIFICATION

(11) **EP 3 738 127 B1**
(45) Date of publication and mention of the grant of the patent: **24.07.2024**
(21) Application number: 18731784.7
(22) Date of filing: 11.06.2018
(51) Int. Cl.: G21C 3/07, C04B 35/00, G21C 21/02

(54) **METHOD OF PROVIDING A TUBULAR CERAMIC COMPONENT FOR USE IN A NUCLEAR REACTOR**
METHODE ZUR BEREITSTELLUNG EINES ROHRFÖRMIGEN KERAMIKBAUTEILS ZUR VERWENDUNG IN EINEM KERNREAKTOR
PROCÉDÉ DE PRÉPARATION D'UN COMPOSANT TUBULAIRE EN CÉRAMIQUE POUR UTILISATION DANS UN RÉACTEUR NUCLÉAIRE

(30) Priority: 31.01.2018 US 201862624420 P
(43) Date of publication of application: 18.11.2020
(73) Proprietor: Westinghouse Electric Sweden AB, 721 63 Västerås (SE)
(72) Inventor: MIDDLEBURGH, Simon, Chester CH3 5E (GB); HALLSTADIUS, Lars, 725 92 Västerås (SE); LAHODA, Edward J., Pittsburgh, Pennsylvania 15218-1352 (US); GÖRANSSON, Kenneth, 723 55 Västerås (SE); XU, Peng, Columbia, South Carolina 29220 (US)
(74) Representative: Bjerkén Hynell KB
(86) International application number: PCT/EP2018/065343
(87) International publication number: WO 2019/149386

(56) References cited:
- EP-A1- 2 899 176
- WO-A1-2011/134757
- WO-A1-2015/053937
- JP-A- H06 279 119
- US-A1- 2015 247 077
- US-A1- 2016 049 211
- US-A1- 2017 204 532

## Description

### TECHNICAL FIELD OF THE INVENTION

The present invention refers generally to doping of tubular ceramic SiC and SiC-SiC components, such as flow channels and cladding tubes in fuel assemblies, for nuclear reactors, especially water reactors, such as Boiling Water Reactors, BWR, and Pressurized Water Reactors, PWR. The invention could also be applicable to fast reactors, such as lead fast reactors.

In particular, the present invention refers to a method of providing a tubular ceramic component for use in a nuclear reactor, comprising an inner layer of silicon carbide, an intermediate layer of silicon carbide fibres in a fill material of silicon carbide, the intermediate layer adjoining the inner layer, and an outer layer of silicon carbide, the outer layer adjoining the intermediate layer.

### BACKGROUND OF THE INVENTION AND PRIOR ART

It is known to use silicon carbide or silicon carbide composites in nuclear components, such as fuel assemblies and flow channels.

US 2006/0039524 discloses a multi-layered cladding tube comprising an inner layer of monolithic silicon carbide, a central layer of silicon carbide fibres surrounded by a silicon carbide matrix, and an outer layer of silicon carbide.

WO 2011/134757 discloses a flow channel for a fuel assembly.

The flow channel comprises an inner layer of silicon carbide, a central layer of silicon carbide fibres surrounded by a filler material of silicon carbide, and an outer layer of silicon carbide.

US 2016/0049211 discloses a multi-layered silicon carbide cladding tube.

WO 2011/134757 discloses a fuel channel arranged to be comprised by a fuel element for a fission reactor.

EP 2899176 discloses a ceramic structure including silicon carbide, that includes carbon and silicon which has ²⁸Si enriched in comparison with a natural abundance ratio.

WO 2015/053937 discloses a method for providing crystalline silicon-containing ceramic material.

US 2015/0247077 discloses adhesive composition and method to join non-oxide silicon based ceramic parts.

JP H06 279119 discloses highly heat conductive SiC ceramics and its production.

US 2017/204532 relates to vapor deposition apparatus and techniques using high purity polymer derived silicon carbide.

Pure silicon carbide, or substantially pure silicon carbide, grows isotropically when exposed to irradiation and high temperatures. The growth is due to impurities (secondary phases) in the crystalline silicon carbide, and to the formation of defects in the crystalline silicon carbide.

In a nuclear reactor, a relatively rapid growth of a silicon carbide component will occur during an initial phase up to a certain level which then remains relatively constant during the lifetime of the component. This is a problem in cladding tubes of silicon carbide. Since the fuel in the cladding tubes swells continuously during the lifetime of the fuel, it is difficult to maintain a constant pellet-cladding gap.

The growth due to impurities may be avoided by securing a small amount of secondary phases, which may be possible by choosing a suitable manufacturing method.

The growth due to the formation of defects occurs in the temperature interval 250-400°C through the formation of point defects, i.e. atoms of Si or C are moved to interstitial positions in the crystalline structure.

### SUMMARY OF THE INVENTION

The object of the present invention is to overcome the problems discussed above. In particular, the invention aims at a reduced and more uniform growth, or swelling, of the tubular ceramic component upon exposure to a neutron flux during operation in a nuclear reactor.

This object is achieved by a method of providing the tubular ceramic component initially defined, which method is characterized in that the silicon carbide of the inner layer, the fill material and the outer layer is doped and comprises at least one dopant in solid solution within crystals of the silicon carbide, wherein the dopant or dopants will provide a pre- swelling or growth of the silicon carbide, before the operation of the tubular ceramic component in the nuclear reactor.

The silicon carbide of the inner layer, the fill material and the outer layer may thus comprise pure crystalline silicon carbide, or substantially pure crystalline silicon carbide, with the dopant or dopants in solid solution in the silicon carbide crystals and with very small quantities of secondary phases, for instance less than 1% of secondary phases.

By adding one or more dopants to the silicon carbide of the inner layer, the fill material and the outer layer, the growth of the cladding tube during operation in the nuclear reactor may be reduced and modified to be more uniform. Especially during the initial phase of the operation, the relatively rapid growth of non-doped silicon carbide components may be significantly reduced.

The dopant or dopants will provide a pre-swelling or growth of the silicon carbide, before the operation of the tubular ceramic component in the nuclear reactor. The change in connectivity due to the presence of the dopant or dopants in solid solution in the crystal structure of the silicon carbide will mean that a population of defects will exist within the structure that will enhance mobility of certain defects and promote additional defects to recombine, preventing further swelling or growth.

The dopant or dopants will provide a possibility to control the defect-related growth and the formation of point defects. The main part of the defect-related growth is due to the displacement of C-atoms. This displacement creates internal stresses and deformation. At sufficiently high internal stresses (which increase with reduced temperature), the growth stops (since new point defects are not any longer stable), i.e. the saturation growth is highest at low temperatures.

According to an embodiment of the invention, the dopant comprises at least one of the substances B, N, Al, P, O, Be, Li, S, Ti, Ge, P₂O₃, P₂O₅, Al₂O₃, AIN, and Al₄C₃.

Doping of the silicon carbide may thus be achieved by adding one or more of the elements B, N, Al, P, O, Be, Li, S, Ti, Ge, and/or one or more of the compounds P₂O₃, P₂O₅, Al₂O₃, AIN, and Al₄C₃ during the manufacturing of the tubular ceramic component.

These dopants may have following properties making them suitable in the silicon carbide of the tubular ceramic component.
- Low neutron cross-section minimizing the absorption of neutrons.
- Larger size of the element than C increasing the formation of internal stresses. The smaller of the dopants may replace the C-atoms in the silicon carbide, whereas the larger of the elements, e.g. S and Ge, may replace the Si-atoms in the silicon carbide.

Some of the dopants may replace both Si and C to different degrees.
- Strong repulsive interaction to interstitials leading to saturation at a lower degree of growth.

According to an embodiment of the invention, the concentration of the dopant in the silicon carbide is 1-1000 ppm.

According to an embodiment of the invention, the concentration of the dopant in the silicon carbide is 10-1000 ppm.

According to an embodiment of the invention, the concentration of the dopant in the silicon carbide is 50-1000 ppm.

According to an embodiment of the invention, the dopant comprises at least N, wherein the nitrogen is enriched to contain a higher percentage of the isotope ¹⁵N than natural N.

According to an embodiment of the invention, the dopant comprises at least B, wherein the boron is enriched to contain a higher percentage of the isotope ¹¹B than natural B.

According to an embodiment of the invention, the silicon carbide of the inner layer, the fill material and the outer layer has a concentration of secondary phases that is less than 1%, preferably less than 0,8%, more preferably less than 0,6%, and most preferably less than 0,4%.

According to an embodiment of the invention, the tubular ceramic component forms a cladding tube of a fuel rod and encloses a pile of nuclear fuel pellets.

According to an embodiment of the invention, the tubular ceramic component forms flow channel of a fuel assembly and encloses a plurality of fuel rods.

### BREIF DESCRIPTION OF THE DRAWINGS

The invention is now to be explained more closely through a description of various embodiments and with reference to the drawings attached hereto.
- Fig 1: discloses schematically a longitudinal sectional view of a fuel assembly for a nuclear reactor.
- Fig 2: discloses schematically a longitudinal sectional view of a fuel rod of the fuel assembly in Fig 1.
- Fig 3: discloses schematically a partly sectional view of a part of the fuel rod in Fig 2.
- Fig 4: discloses schematically a partly sectional view of a part of the fuel assembly in Fig 1.

### DETAILED DESCRIPTION OF VARIOUS EMBODIMENTS

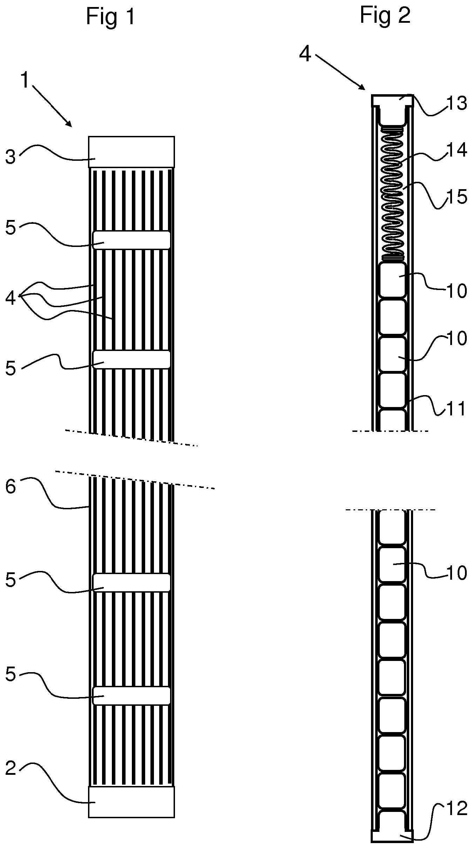

Fig. 1 discloses a fuel assembly 1 for use in nuclear reactors, in particular in water cooled light water reactors, LWR, such as a Boiling Water Reactor, BWR, or a Pressurized Water reactor, PWR. The fuel assembly 1 comprises a bottom member 2, a top member 3 and a plurality of elongated fuel rods 4 extending between the bottom member 2 and the top member 3. The fuel rods 4 are maintained in their positions by means of a plurality of spacers 5.

Furthermore, the fuel assembly 1 comprises, when intended to be used in a BWR, a flow channel 6 that surrounds and encloses the fuel rods 4.

Fig 2 discloses one of the fuel rods 4 of the fuel assembly 1 of Fig 1. The fuel rod 4 comprises a nuclear fuel in the form of a plurality of sintered nuclear fuel pellets 10, and a cladding tube 11 enclosing the nuclear fuel pellets 10. The fuel rod 4 comprises a bottom plug 12 sealing a lower end of the cladding tube 11, and a top plug 13 sealing an upper end of the fuel rod 4. The nuclear fuel pellets 10 are arranged in a pile in the cladding tube 11. The cladding tube 11 thus encloses the fuel pellets 10 and a gas. A spring 14 is arranged in an upper plenum 15 between the pile of nuclear fuel pellets 10 and the top plug 13. The spring 14 presses the pile of nuclear fuel pellets 10 against the bottom plug 12.

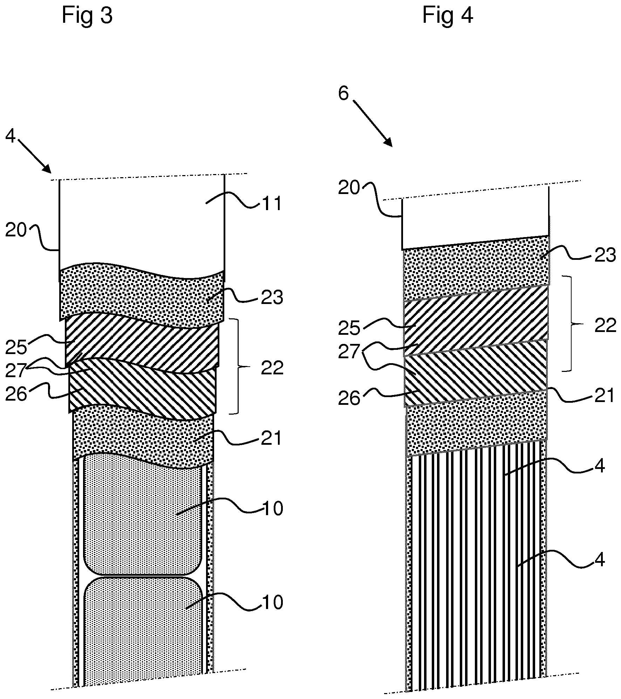

Fig 3 discloses a tubular ceramic component 20 of a first embodiment according to which the tubular ceramic component 20 forms the cladding tube 11 of the fuel rod. The tubular ceramic component 20 comprises an inner layer 21, an intermediate layer 22 adjoining the inner layer 21, and an outer layer 23 adjoining the intermediate layer 22.

Fig 4 discloses a tubular ceramic component 20 of a second embodiment according to which the tubular ceramic component 20 forms the flow channel 6 of the fuel assembly 1. Also in the second embodiment, the tubular ceramic component 20 comprises an inner layer 21, an intermediate layer 22 adjoining the inner layer 21, and an outer layer 23 adjoining the intermediate layer 22.

The inner layer 21 consists of homogeneous, preferably monolithic, silicon carbide. The intermediate layer 22 consists of silicon carbide fibres 25, 26 in a fill material 27 of homogeneous silicon carbide. The outer layer 23 consists of homogeneous, preferably monolithic, silicon carbide.

As can be seen in Fig 3, the silicon carbide fibres 25, 26 of the intermediate layer 22 are wound in two sublayers, wherein the silicon carbide fibres 25, 26 of the two layers run crosswise, i.e. the fibre direction of the silicon carbide fibres 26, 27 of the two sublayers crosses each other.

It should be noted that the intermediate layer 22 also may comprise only one sublayer with silicon carbide fibres 25, 26, or more than two sublayers with silicon carbide fibres 25, 26.

The silicon carbide of the inner layer 21, of the fill material 27 and of the outer layer 23 is crystalline and doped with one or more dopants.

The dopants are present in solid solution within crystals of the crystalline silicon carbide of the inner layer 21, of the fill material 27 and of the outer layer 23.

The dopant, or dopants, may be added to the silicon carbide in various ways. For instance the dopants can be added during the process of depositing the silicon carbide onto the silicon carbide fibres 25, 26 and onto the intermediate layer 22.

In a first step, silicon carbide fibres 25, 26 may be wound in one or more sublayers to a tubular shape, for instance on a suitable form.

In a second step, silicon carbide may be deposited on the silicon fibres 25, 26 of the intermediate layer 22 to form the fill material 27. During the deposition process, the silicon carbide will penetrate the interspaces between the silicon carbide fibres 25, 26. The silicon carbide may be deposited by any suitable method such as sputtering, physical vapour deposition, PVD, chemical vapour deposition, CVD, etc. The dopant may then be added in advance to the silicon carbide to be deposited, or be mixed with the silicon carbide during the depositing process.

In a third step, the silicon carbide may be deposited to the intermediate layer 22 to form the inner layer 21 onto the intermediate layer 22 by any of the depositing methods mentioned above. The dopant may then be added in the same way as to the silicon carbide of intermediate layer 22.

In a fourth step, the silicon carbide may be deposited to the intermediate layer 22 to form the outer layer 23 onto the intermediate layer 22 by any of the depositing methods mentioned above. The dopant may then be added in the same way as to the silicon carbide of intermediate layer 22. The outer layer 23 may be deposited after or before the deposition of the inner layer 21.

According to another method, the dopant or dopants may be supplied during the manufacturing of the silicon carbide, for instance by adding the dopant or dopants to SiO₂ and C in a so called Acheson furnace.

The concentration of the dopants in the silicon carbide of the inner layer 21, of the fill material 27 and of the outer layer 23 may be 1-1000 ppm, preferably 10-1000 ppm, more preferably 50-1000 ppm, and most preferably 50-500 ppm.

The silicon carbide of the inner layer 21, of the fill material 27 and of the outer layer 23 may contain a balance of possible residual substances in addition to the dopant or dopants.

The silicon carbide of the inner layer 21, of the fill material 27 and of the outer layer 23 has a concentration of secondary phases that is less than 1 %.

The silicon carbide fibres 25, 26 are made of pure, or substantially pure, silicon carbide being free of dopants. A balance of possible residual substances may be present in the silicon carbide fibres 25, 26.

The dopants to be added to and comprised by the silicon carbide comprise at least one of the substances B, N, Al, P, O, Be, Li, S, Ti, Ge, P₂O₃, P₂O₅, Al₂O₃, AIN, and Al₄C₃.

The silicon carbide may be doped by the addition of one of these substances, or with a combination of two or more of these substances.

### B, boron

B is a possible dopant which may be contained in solid solution in crystals of the silicon carbide. Preferably, the boron is enriched to contain a higher percentage of the isotope ¹¹B than natural B in order to reduce the neutron absorption cross-section. B may be added as an element, for instance by sputtering, PVD or CVD.

### N, nitrogen

N is a possible dopant which may be contained in solid solution in crystals of the silicon carbide. Preferably, the nitrogen is enriched to contain a higher percentage of the isotope ¹⁵N than natural N in order to reduce the neutron absorption cross-section. N may be added as an element, for instance by sputtering, PVD or CVD. The element N is larger than C, and thus N may be effective to replace C-atoms in the silicon carbide.

### Al, aluminium

Al is a possible dopant which may be contained in solid solution in crystals of the silicon carbide. Al may be added as an element, for instance by sputtering, PVD or CVD. Al may also be added as one of the compounds Al₂O₃, AIN and Al₄C₃. Also in these cases, Al will be contained as an element in solid solution in the crystals of the silicon carbide. The element Al is larger than C, and thus Al may be effective to replace C-atoms in the silicon carbide.

### P, phosphorous

P is a possible dopant which may be contained in solid solution in crystals of the silicon carbide. P may be added as an element, for instance by sputtering, PVD or CVD. P may also be added as one of the compounds P₂O₃ and P₂O₅. Also in these cases, P will be contained as an element in solid solution in the crystals of the silicon carbide. The element P is larger than C, and thus P may be effective to replace C-atoms in the silicon carbide.

### O, oxygen

O is a possible dopant which may be contained in solid solution in crystals of the silicon carbide. O may be added as an element, for instance by sputtering, PVD or CVD. O may also be added as one of the compounds P₂O₃, P₂O₅ and Al₂O₃. Also in these cases, O will be contained as an element in solid solution in the crystals of the silicon carbide. The element O is larger than C, and thus O may be effective to replace C-atoms in the silicon carbide.

### Be, beryllium

Be is a possible dopant which may be contained in solid solution in crystals of the silicon carbide. Be may be added as an element, for instance by sputtering, PVD or CVD.

### Li, lithium

Li is a possible dopant which may be contained in solid solution in crystals of the silicon carbide. Li may be added as an element, for instance by sputtering, PVD or CVD.

### S, sulphur

S is a possible dopant which may be contained in solid solution in crystals of the silicon carbide. S may be added as an element, for instance by sputtering, PVD or CVD. The element S is larger than both C and Si, and thus S may be effective to replace C-atoms and Si-atoms in the silicon carbide.

### Ti, titanium

Ti is a possible dopant which may be contained in solid solution in crystals of the silicon carbide. Ti may be added as an element, for instance by sputtering, PVD or CVD. Ti may also be added as the compound TiC₁₋ₓ. Also in this case, Ti will be contained as an element in solid solution in the crystals of the silicon carbide. The element Ti is larger than both C and Si, and thus Ti may be effective to replace C-atoms and Si-atoms in the silicon carbide.

### Ge, germanium

Ge is a possible dopant which may be contained in solid solution in crystals of the silicon carbide. Ge may be added as an element, for instance by sputtering, PVD or CVD. The element Ge is larger than both C and Si, and thus Ge may be effective to replace C-atoms and Si-atoms in the silicon carbide.

The present invention is not limited to the embodiments disclosed and discussed above, but may be varied and modified within the scope of the following claims.

## Claims

1. A method of providing a tubular ceramic component (20) for use in a nuclear reactor, the tubular ceramic component (20) comprises:
an inner layer (21) of silicon carbide,
an intermediate layer (22) of silicon carbide fibres (25, 26) in a fill material (27) of silicon carbide, the intermediate layer (22) adjoining the inner layer (21), and
an outer layer (23) of silicon carbide, the outer layer (23) adjoining the intermediate layer (22),
**characterized in that** the method comprises doping the silicon carbide of the inner layer (21), the fill material and the outer layer (23) with a dopant comprising at least one dopant in solid solution within crystals of the silicon carbide, wherein the dopant or dopants will provide a pre-swelling or growth of the silicon carbide, before the operation of the tubular ceramic component in the nuclear reactor.

2. The method according to claim 1, wherein the dopant comprises at least one of the substances B, N, Al, P, O, Be, Li, S, Ti, Ge, P₂O₃, P₂O₅, Al₂O₃, AIN, and Al₄C₃.

3. The method according to any one of claims 1 and 2, wherein the concentration of the dopant in the silicon carbide is 1-1000 ppm.

4. The method according to any one of claims 1 and 2, wherein the concentration of the dopant in the silicon carbide is 10-1000 ppm.

5. The method according to any one of claims 1 and 2, wherein the concentration of the dopant in the silicon carbide is 50-1000 ppm.

6. The method according to any one of the preceding claims, wherein the dopant comprises at least N, wherein the nitrogen is enriched to contain a higher percentage of the isotope ¹⁵N than natural N.

7. The method according to any one of the preceding claims, wherein, the dopant comprises at least B, wherein the boron is enriched to contain a higher percentage of the isotope ¹¹B than natural B.

8. The method according to any one of the preceding claims, wherein the silicon carbide of the inner layer, the fill material and the outer layer has a concentration of secondary phases that is less than 1%.

9. The method according to any one of the preceding claims, wherein the tubular ceramic component (20) forms a cladding tube (11) of a fuel rod (4) and encloses a pile of nuclear fuel pellets (10).

10. The method according to any one of the preceding claims, wherein the tubular ceramic component (20) forms flow channel (6) of a fuel assembly and (1) encloses a plurality of fuel rods (4).

## Patentansprüche

1. Verfahren zur Bereitstellung eines rohrförmigen Keramikbauteils (20) zur Verwendung in einem Kernreaktor, wobei das rohrförmige Keramikbauteil (20) Folgendes umfasst:
eine Innenschicht (21) aus Siliciumcarbid,
eine Zwischenschicht (22) aus Siliciumcarbidfasern (25, 26) in einem Füllmaterial (27) aus Siliciumcarbid, wobei die Zwischenschicht (22) an die Innenschicht (21) angrenzt, und
eine Außenschicht (23) aus Siliciumcarbid, wobei die Außenschicht (23) an die Zwischenschicht (22) angrenzt,
**dadurch gekennzeichnet, dass** das Verfahren das Dotieren des Siliciumcarbids der Innenschicht (21), des Füllmaterials und der Außenschicht (23) mit einem Dotiermittel umfasst, das mindestens ein Dotiermittel in fester Lösung innerhalb von Kristallen des Siliciumcarbids umfasst, wobei das oder die Dotiermittel ein Vorquellen oder Wachsen des Siliciumcarbids vor dem Betrieb des rohrförmigen Keramikbauteils in dem Kernreaktor bereitstellen.

2. Verfahren nach Anspruch 1, wobei das Dotiermittel mindestens eine der Substanzen B, N, Al, P, O, Be, Li, S, Ti, Ge, P₂O₃, P₂O₅, Al₂O₃, AlN und Al₄C₃ umfasst.

3. Verfahren nach einem der Ansprüche 1 und 2,
wobei die Konzentration des Dotiermittels in dem Siliciumcarbid 1-1.000 ppm beträgt.

4. Verfahren nach einem der Ansprüche 1 und 2,
wobei die Konzentration des Dotiermittels in dem Siliciumcarbid 10-1.000 ppm beträgt.

5. Verfahren nach einem der Ansprüche 1 und 2,
wobei die Konzentration des Dotiermittels in dem Siliciumcarbid 50-1.000 ppm beträgt.

6. Verfahren nach einem der vorangehenden Ansprüche, wobei das Dotiermittel mindestens N umfasst, wobei der Stickstoff angereichert ist, um einen höheren Prozentsatz des Isotops ¹⁵N als natürlicher N zu enthalten.

7. Verfahren nach einem der vorangehenden Ansprüche, wobei das Dotiermittel mindestens B umfasst, wobei das Bor angereichert ist, um einen höheren Prozentsatz des Isotops ¹¹B als natürliches B zu enthalten.

8. Verfahren nach einem der vorangehenden Ansprüche, wobei das Siliciumcarbid der Innenschicht, des Füllmaterials und der Außenschicht eine Konzentration sekundärer Phasen aufweist, die kleiner als 1 % ist.

9. Verfahren nach einem der vorangehenden Ansprüche, wobei das rohrförmige Keramikbauteil (20) ein Hüllrohr (11) eines Brennstoffstabs (4) ausbildet und eine Ansammlung von Kernbrennstoffpellets umschließt (10).

10. Verfahren nach einem der vorangehenden Ansprüche, wobei das rohrförmige Keramikbauteil (20) einen Strömungskanal (6) eines Brennelements (1) ausbildet und eine Mehrzahl von Brennstoffstäben (4) umschließt.

## Revendications

1. Procédé de fourniture d'un composant céramique tubulaire (20) pour une utilisation dans un réacteur nucléaire, le composant céramique tubulaire (20) comprend :
une couche interne (21) de carbure de silicium,
une couche intermédiaire (22) de fibres de carbure de silicium (25, 26) dans un matériau de remplissage (27) de carbure de silicium, la couche intermédiaire (22) étant attenante à la couche interne (21), et
une couche externe (23) de carbure de silicium, la couche externe (23) étant attenante à la couche intermédiaire (22),
**caractérisé en ce que** le procédé comprend le dopage du carbure de silicium de la couche interne (21), du matériau de remplissage et de la couche externe (23) avec un dopant comprenant au moins un dopant en solution solide au sein de cristaux du carbure de silicium, dans lequel le dopant ou les dopants vont assurer un prégonflement ou une croissance du carbure de silicium, avant le fonctionnement du composant céramique tubulaire dans le réacteur nucléaire.

2. Procédé selon la revendication 1, dans lequel le dopant comprend au moins l'une des substances B, N, Al, P, O, Be, Li, S, Ti, Ge, P₂O₃, P₂O₅, Al₂O₃, AlN, et Al₄C₃.

3. Procédé selon l'une quelconque des revendications 1 et 2, dans lequel la concentration du dopant dans le carbure de silicium est de 1 à 1000 ppm.

4. Procédé selon l'une quelconque des revendications 1 et 2, dans lequel la concentration du dopant dans le carbure de silicium est de 10 à 1000 ppm.

5. Procédé selon l'une quelconque des revendications 1 et 2, dans lequel la concentration du dopant dans le carbure de silicium est de 50 à 1000 ppm.

6. Procédé selon l'une quelconque des revendications précédentes, dans lequel le dopant comprend au moins N, dans lequel l'azote est enrichi pour contenir un pourcentage plus élevé de l'isotope ¹⁵N que le N naturel.

7. Procédé selon l'une quelconque des revendications précédentes, dans lequel le dopant comprend au moins B, dans lequel le bore est enrichi pour contenir un pourcentage plus élevé de l'isotope ¹¹B que le B naturel.

8. Procédé selon l'une quelconque des revendications précédentes, dans lequel le carbure de silicium de la couche interne, du matériau de remplissage et de la couche externe a une concentration de phases secondaires qui est inférieure à 1 %.

9. Procédé selon l'une quelconque des revendications précédentes, dans lequel le composant céramique tubulaire (20) forme un tube de gainage (11) d'une barre de combustible (4) et renferme un empilement de pastilles de combustible nucléaire (10) .

10. Procédé selon l'une quelconque des revendications précédentes, dans lequel le composant céramique tubulaire (20) forme un canal d'écoulement (6) d'un ensemble combustible et (1) renferme une pluralité de barres de combustible (4).
